# EUROPÄISCHE PATENTSCHRIFT

(11) **EP 2 508 008 B1**
(45) Veröffentlichungstag und Bekanntmachung des Hinweises auf die Patenterteilung: **14.09.2016**
(21) Anmeldenummer: 10774203.3
(22) Anmeldetag: 03.11.2010
(51) Int. Cl.: H04R 1/34, H04R 1/36, H04R 1/26, H04N 5/64, H04R 1/28, H04R 1/40

(54) **FLACHLAUTSPRECHER**
FLAT LOUDSPEAKER
HAUT-PARLEUR PLAT

(30) Priorität: 02.12.2009 US 265905 P
(43) Veröffentlichungstag der Anmeldung: 10.10.2012
(73) Patentinhaber: Fraunhofer-Gesellschaft zur Förderung der angewandten Forschung e.V., 80686 München (DE)
(72) Erfinder: EHRIG, Lutz, 01277 Dresden (DE); BEER, Daniel, 98693 Martinroda (DE)
(74) Vertreter: Stöckeler, Ferdinand
(86) Internationale Anmeldenummer: PCT/EP2010/066698
(87) Internationale Veröffentlichungsnummer: WO 2011/067060

(56) Entgegenhaltungen:
- EP-A2- 1 067 818
- WO-A1-2007/085305
- WO-A2-01/39541
- GB-A- 2 284 125
- US-A- 3 500 953
- US-A1- 2004 125 969
- US-B1- 7 010 138

## Beschreibung

Die vorliegende Erfindung bezieht sich auf einen Flachlautsprecher, wie er zum Beispiel bei Flachbildschirmen oder bei einem TV einsetzbar ist.

Für bestimmte Applikationen sind Lautsprecher mit geringer Bautiefe, wie z.B. kleiner 2 cm, erforderlich, wie z.B. bei TVs und Flachbildschirmen. Existierende FLS-(FLS=Flachlautsprecher) Technologien ermöglichen bereits eine Bautiefe von 2 cm und weniger. Die DE 102009010278.7 beschreibt beispielsweise eine FLS-Technologie, die auf einem Array aus Miniaturwandlern basiert, die in ein geschlossenes Gehäuse eingebaut sind. Mit dieser Technologie lassen sich sogar flache Lautsprecher mit einer Gehäusetiefe von kleiner/gleich 10 mm herstellen. Die Abstrahlung der Miniaturwandler erfolgt direkt zum Hörer hin.

Für bestimmte Anwendungen, wie z.B. bei TVs und Flachbildschirmen mit vollständig durch das Display abgedeckter Front, dürfen diese Lautsprecher aber nicht nach vorne sichtbar sein und können deshalb Schall nicht direkt zum Hörer abstrahlen. Die Membran-Normale kann also nicht in Richtung des Hörers zeigen und aufgrund der geringen erforderten Bautiefe ist eine seitliche Ausrichtung der Membran-Normalen ebenfalls nicht möglich. Für ein Hörerlebnis muss der Schall jedoch zum Hörort, d.h. nach vorne, gelangen. Im Tieftonbereich ist dies weniger kritisch, da sich der Schall ungerichtet in alle Richtungen ausbreitet. Eine kugelförmige Schallausbreitung tritt immer dann auf, wenn die Wellenlänge wesentlich größer als der Membrandurchmesser ist, was im Tieftonbereich der Fall ist. Für den Hochtonbereich funktioniert dies allerdings nicht. Die schallabstrahlende Fläche, d.h. die Lautsprechermembran, ist für hohe Töne zu groß gegenüber der abzustrahlenden Wellenlänge. Eine ungerichtete Schallabstrahlung kann deshalb nicht stattfinden. Es findet vielmehr nur eine gerichtete Schallabstrahlung statt, und die eben nach hinten.

Eine mögliche Lösung dieses Problems bestünde darin, die Membran zu verkleinern, bzw. den Membrandurchmesser zu verkleinern, was allerdings umgekehrt zu einem unzureichenden Schalldruckpegel führte. Eine Abstrahlung nach hinten wäre zudem so lange nicht kritisch, solange die Reflexion über eine hinter dem Flachlautsprecher befindliche Wand möglich wäre. Die Funktionsfähigkeit des Lautsprechers hinge aber dann stark von der Position des Flachlautsprechers zur Wand und von der Reflexionseigenschaft der Wand selbst ab, was in vielen Anwendungsfällen nicht akzeptabel ist. Zudem soll für bestimmte Anwendungen, wie z.B. bei TVs eine Stereowiedergabe erzielbar sein, d.h. eine räumliche Trennung der Kanäle, d.h. des linken und rechten Kanals. Eine solche räumliche Trennung ist beispielsweise insbesondere im Frequenzbereich oberhalb von 100 Hz bis 200 Hz erforderlich, da der Frequenzbereich darunter für den Stereorichtungseindruck weniger ins Gewicht fällt.

Die EP 1 067 818 A2 beschreibt einen Lautsprecher für ein Videogerät, das einen seitlich verlaufenden Schallraum aufweist, der von einer Blende teilweise abgedeckt wird, um lediglich Schlitze zur Schallausgabe preiszugeben. Nach vorne abstrahlende Lautsprecher geben ihren Schall jeweils in eine Schallführung ab, die den jeweiligen Lautsprecher mit dem Schallraum verbindet. Aus der Schallführung austretender Schall trifft somit im Schallraum auf die Blende.

Die US 7,010,138 B1 beschreibt einen Lautsprecher mit einer phasenunkorrelierten Diffusschallquelle und einer Schallführung, die mit der Schallquelle gekoppelt ist, um die akustische Energie davon auszurichten, wobei die Schallführung einen im Wesentlichen parallel verlaufenden Abschnitt in der Nähe der Schallquelle und einen Abschluss an dem entfernten Ende aufweist.

Die US 3,500,953 beschreibt einen Lautsprecher mit einem nach unten ausgerichteten Tieftonlautsprecher und einem nach oben ausgerichteten Hochtöner, die zusammen in einem Gehäuse mit einer kugelförmigen Symmetrie angeordnet sind.

Die WO 2007/085305 beschreibt Lautsprecher für ein Handy, wobei allerdings die Öffnungen nicht seitlich angeordnet sind.

Die US 2004/0125969 A1 beschreibt ein triaxiales Lautsprechersystem.

Die WO 01/39541 A2 beschreibt einen Sachverhalt, wonach ein nach hinten abstrahlender Tieftonlautsprecher vorgesehen ist.

Die GB2284125A beschreibt vertikale Arraylausprecher zu dem Zweck der Eingrenzung auf die horizontale Abstrahlung.

Die Aufgabe der vorliegenden Erfindung besteht deshalb darin, einen Flachlautsprecher zu schaffen, der es auch ermöglicht, bei umgekehrtem Aufstellen, d.h. mit seiner Rückseite dem Hörer zugewandt, ein qualitativ hochwertiges Hörerlebnis zu ermöglichen, ohne dass gesonderte Zusatzmaßnamen erforderlich sind, oder der Aufstellort wegen Notwendigkeit der Existenz einer reflektierenden Wand eingeschränkt wäre.

Diese Aufgabe wird durch einen Flachlautsprecher gemäß Anspruch 1 gelöst.

Ein der vorliegenden Erfindung zugrunde liegender Kerngedanke besteht darin, dass ein Flachlautsprecher mit einer solchen Abstrahlcharakteristik erhalten werden kann, die in dem Fall des umgekehrten Aufstellens des Flachlautsprechers ein besseres Hörergebnis liefert, wenn ein Lautsprecher in dem Gehäuse vorgesehen wird und eine Schallführung so ausgebildet ist, dass Schall von dem Lautsprecher über eine akustische Apertur in dem Gehäuse für eine ungerichtete Abstrahlung nach außen geführt wird.

Gemäß einem Ausführungsbeispiel ist die akustische Apertur und die Schallführung in Form eines Schlitzes in dem Gehäuse gebildet, der lateral in dem Gehäuse verläuft und sich seitlich in demselben öffnet, und die akustische Apertur ist - zumindest in einer Dimension- kleiner als ein Lautsprechermembrandurchmesser oder kleiner als eine Wellenlänge einer höchsten Frequenz des Schalls von dem Lautsprecher. Der Schall kann sich somit hinter der akustischen Apertur ungerichtet, wie z.B. zylinderförmig bzw. kugelförmig ausbreiten und somit auch nach vorne zum Hörer gelangen.

Vorteilhafte Ausgestaltungen sind Gegenstand der abhängigen Patentansprüche. Bevorzugte Ausführungsbeispiele der vorliegenden Erfindung werden nachfolgend Bezug nehmend auf die beiliegenden Zeichnungen näher erläutert, worunter
- Fig. 1: eine schematische Darstellung eines Flachlautsprechers gemäß einem Ausführungsbeispiel in einem aufgestellten Zustand zeigt, in welchem die Flachlautsprecherrückseite dem Hörer zugewandt ist;
- Fig. 2: eine schematische Teilschnittansicht von oben des Flachlautsprechers von Fig. 1 gemäß einem Ausführungsbeispiel zeigt;
- Fig. 3A: eine Raumansicht eines Flachlautsprechers gemäß einem Ausführungsbeispiel zeigt, wobei die Vorderseite zu sehen ist;
- Fig.3B: eine Raumansicht eines Flachlautsprechers gemäß einem weiteren Ausführungsbeispiel zeigt, wobei die Vorderseite zu sehen ist;
- Fig. 3C: eine Schnittansicht eines Flachlautsprechers gemäß Fig. 3b zeigt;
- Fig. 4A,B: eine Teilansicht eines Ausschnitts aus Fig. 3b gemäß verschiedener Ausführungsbeispiele zeigen, in welchen die akustische Apertur zu sehen ist;
- Fig. 5: ein Blockschaltbild einer möglichen Ansteuerung eines Flachlautsprechers gemäß einem Ausführungsbeispiel zeigt;
- Fig. 6: eine Seitenansicht eines Flachlautsprechers gemäß einem weiteren Ausführungsbeispiels zeigt; und
- Fig. 7: eine schematische Darstellung eines Flachlautsprechers gemäß einem Vergleichsbeispiel in dem Fall einer umgekehrten Aufstellung gegenüber einem Hörer zeigt.

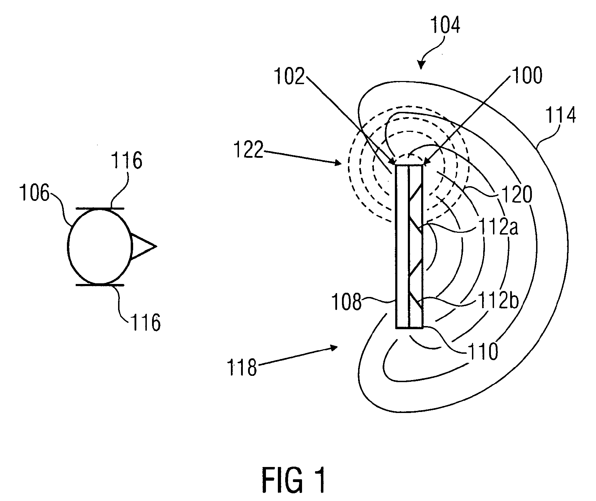

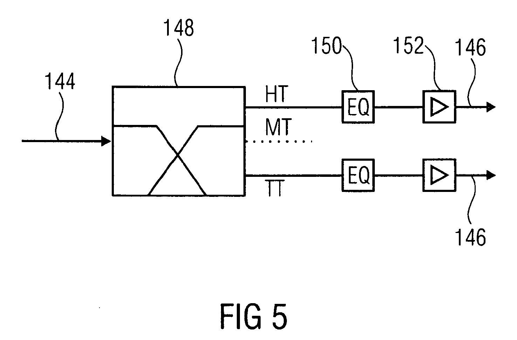

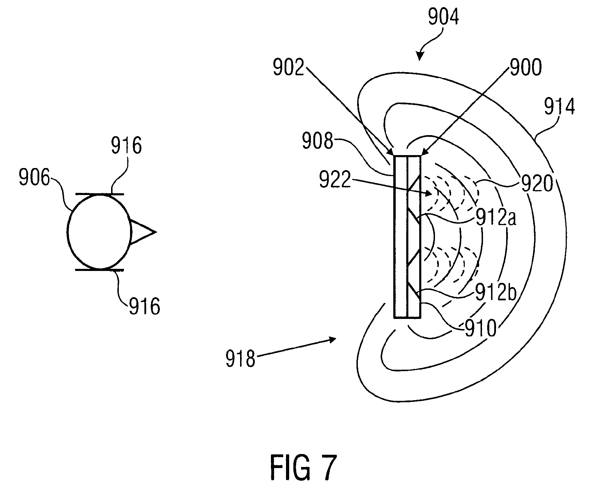

Bevor Bezug nehmend auf die Fig. 1 und 5 Ausführungsbeispiele der vorliegenden Anmeldung beschrieben werden, sollte zunächst anhand von Fig. 7 das Problem näher erörtert werden, das auftritt, wenn ein Flachlautsprecher mit seiner Rückseite dem Hörer zugewandt aufgestellt werden soll, wie z.B. in dem Fall, dass der Flachlautsprecher 900 hinter einem Display 902 eines TVs oder Flachbildschirms 904, der die beiden Komponenten umfasst, "versteckt" werden soll.

Dementsprechend zeigt Fig. 7 einen Hörer 906, der auf das Display 902 schaut, welches wiederum mit der Bild anzeigenden Vorderseite 908 dem Hörer und Betrachter 906 zugewandt ist. Display 902 und Flachlautsprecher 900 sind Rücken an Rücken zueinander angeordnet bzw. aneinander befestigt. D.h., eine Vorderseite 910 des Flachlautsprechers 900 weist von dem Hörer 906 weg, und die Rückseiten von Display 902 und Flachlautsprecher 900 sind einander zugewandt. Die Vorderseite 910 bildet hier in diesem Beispiel gleichzeitig die Rückseite des TVs bzw. Flachbildschirms 904.

Es wird davon ausgegangen, dass der Flachlautsprecher 900 von Fig. 7 zumindest Tieftonlautsprecher und Hochtonlautsprecher aufweist, die über die Rückseite 910 verteilt angeordnet sind, um in flächennormalen Richtung der Rückseite 910 abzustrahlen. In Fig. 7 sind exemplarisch nur zwei Lautsprecher 912a und 912b angedeutet. Aufgrund der unterschiedlichen Wellenlängen, die von den Tieftonlautsprechern und den Hochtonlautsprechern abgestrahlt werden, ist auch das Abstrahlverhalten dieser Lautsprecher unterschiedlich. Die tiefen Töne der Tieftonlautsprecher beugen sich, wie es mit durchgezogenen Linien 914 angedeutet ist, um das Gehäuse des TVs oder Flachbildschirms 904 herum und gelangen so zu dem Hörer 906 bzw. dessen Ohren 916, wie es bei 918 angedeutet wird. Die Abstrahlung des Hochtonanteils durch die Hochtonlautsprecher ist allerdings gerichtet, wie es mit gestrichelter Linie 920 und dem Pfeil 922 in Fig. 7 angedeutet ist. D.h., es tritt keine Beugung auf, die den Schall 920 zu dem Hörer 906 umlenken könnte. Dies bedeutet, dass das Hörergebnis in dem Fall von Fig. 7 inakzeptabel ist, wenn nicht durch andere Maßnahmen, wie z.B. das Platzieren einer geeigneten Wand als Reflektor in Betrachterrichtung hinter dem Flachlautsprecher 900 oder dergleichen, dafür gesorgt wird, dass der Schall zum Hörer gelangt.

Das soeben beschriebene Problem tritt eigentlich nur deshalb auf, weil der Lautsprecher nicht nach vorne in Erscheinung treten soll, sondern der Flachlautsprecher 900 vielmehr mit seiner Rückseite dem Hörer zugewandt sein soll. In dem Beispiel von Fig. 7 ermöglicht dies eine größere laterale Bildfläche des Displays 902 bei gleicher lateraler Ausdehnung des Gehäuses. In anderen Anwendungen, ohne Display 902, ermöglichte der Lautsprecher 900 ganz allgemein eine freiere Nutzung bzw. eine Vervielfachung der Design Optionen bezüglich der Gestaltung der Rückseite des Flachlautsprechers 900, die dann ja als sichtbare Vorderseite dient.

Die nachfolgend beschriebenen Ausführungsbeispiele ermöglichen die Erzielung eben jener Vorteile unter umgekehrter Ausrichtung eines Flachlautsprechers, wobei aber dabei das Hörergebnis verbessert wird, ohne dass dazu Zusatzmaßnahmen erforderlich wären, die die Einsatz- bzw. Aufstellmöglichkeiten wieder stark einschränken würden, wie z.B. das bereits erwähnte Vorsehen einer Reflektorwand usw. Insbesondere ermöglichen es die nachfolgend beschriebenen Ausführungsbeispiele, dass auch der Hochtonschall nach vorne zum Hörer gelangt, auch wenn die Vorderseite des Flachlautsprechers dem Hörer abgewandt und dafür die Rückseite derselben dem Hörer zugewandt ist.

Fig. 1 zeigt die Situation von Fig. 7 mit einem Flachlautsprecher gemäß einem Ausführungsbeispiel der vorliegenden Erfindung. In dem Fall von Fig. 1 sind die den Elementen aus Fig. 7 entsprechenden Elemente mit Bezugszeichen versehen, die sich von denjenigen aus Fig. 7 lediglich in ihrer ersten Ziffer unterscheiden, nämlich eine "eins" anstelle einer "neun" besitzen, weshalb vorhergehende Ausführungen Bezug nehmend auf Fig. 7 auch auf Fig. 1 zutreffen sollten, soweit nicht im Folgenden explizit auf Unterschiede hingewiesen wird.

Insbesondere handelt es sich also auch bei dem Flachlautsprecher 100 von Fig. 1 um einen solchen, der zusammen mit einem Display 102 einen Fernseher oder Flachbildschirm 104 bildet, die hierzu Rücken an Rücken zueinander angeordnet und miteinander verbunden sind. Die laterale Ausdehnung des Displays 102 ist in dem Ausführungsbeispiel von Fig. 1 gleich der lateralen Ausdehnung des Flachlautsprechers 100 bzw. des Gehäuses des Flachlautsprechers 100, weshalb eine Schallabstrahlung nach vorne zum Hörer 106 hin direkt nicht möglich ist.

Wie in dem Fall von Fig. 7 umfasst der Flachlautsprecher 100 und seine Rückseite 110 eine zweidimensionale laterale Verteilung von Lautsprechern 112a bzw. 112b, wie z.B. elektrodynamischen Wandlern. Allerdings handelt es sich bei diesem Lautsprecher 112a und 112b um Mittel- und/oder Tieftonlautsprecher zur Abstrahlung des Mittel- und/oder Tieftonanteils 114, der aufgrund der größeren Wellenlänge gegenüber einer lateralen Membranausdehnung bzw. einem Membrandurchmesser der Lautsprecher 112a und 112b ungerichtet abgestrahlt wird und sich um das Gehäuse des Flachlautsprechers 100 bzw. des Gerätes 104 beugen kann, wie es bei 118 gezeigt ist.

Zur Erzeugung des Hochtonanteils 120 ist ein in Fig. 1 nicht mehr dargestellter Hochtonlautsprecher vorgesehen, dessen abgestrahlter Schall in einer in Fig. 1 ebenfalls nicht näher dargestellten Schallführung, wie z.B. einem Schlitz, zu einer akustischen Apertur seitlich in einem Gehäuse des Flachlautsprechers 100 für eine ungerichtete Abstrahlung nach außen geführt wird. Von dort aus breitet sich der Schall in dem Fall von Fig. 1, wo die Apertur länglich, als Schlitz, mit ihrer Längsachse vertikal verlaufend gebildet ist und somit nur in einer Dimension, nämlich in der Horizontalen, die Bedingung erfüllt ist, dass die Ausdehnung der Apertur kleiner als die Wellenlänge des Hochtonschalls des Hochtonlautsprechers ist, nahezu zylinderförmig aus und gelangt somit auch nach vorn zum Hörer 106 und dessen Ohren 116, wie es bei 122 angedeutet ist.

Gemäß dem Ausführungsbeispiel von Fig. 1 werden somit die Vorteile, die im Vorhergehenden bezüglich Fig. 7 beschrieben wurden, ohne die Nachteile in Bezug auf das Hörergebnis des Nutzers 106 erzielbar gemacht.

In anderen Worten ausgedrückt ermöglicht der Flachlautsprecher von Fig. 1 ein besseres Hörergebnis in Bezug auf den Hochtonanteil auch dann, wenn der Hörer rückseitig zu dem Flachlautsprecher 100 angeordnet ist, indem in dem Gehäuse ein Lautsprecher und eine Schallführung angeordnet sind, und die Schallführung so ausgebildet ist, dass der Schall von dem Lautsprecher über eine akustische Apertur in dem Gehäuse für eine ungerichtete Abstrahlung nach außen geführt wird. Die akustische Apertur ist dabei seitlich in dem Gehäuse des Flachlautsprechers 100 gebildet. Sie nimmt damit weder nutzbare Fläche an einer Rückseite des Flachlautsprechers 100 weg noch an der Vorderseite 110. Zudem beträgt der Winkel, unter welchem die Ablenkung des Schalls zum Hörer 106 hin zu erfolgen hat, weniger, als wenn die akustische Apertur nach hinten gerichtet wäre.

Für die Ungerichtetheit der Abstrahlung ist eine Fläche der akustischen Apertur beispielsweise kleiner als eine laterale Flächenabmessung der Membran des entsprechenden Hochtonlautsprechers. Anders ausgedrückt, ist gemäß dem vorliegenden Ausführungsbeispiel die akustische Apertur kleiner als ein Lautsprechermembrandurchmesser. Alternativ kann eine Größe der akustischen Apertur kleiner als die Wellenlänge einer höchsten Frequenz des Schalls eingestellt werden, der von dem entsprechenden Hochtonlautsprecher abgestrahlt wird.

Zu Fig. 1 wird noch darauf hingewiesen, dass in Fig. 1 zwar nur die Abstrahlung an einer akustischen Apertur an der von dem Hörer 106 aus linken Seite des Flachlautsprechers 104 dargestellt worden ist, dass aber natürlich auf der gegenüberliegenden rechten Seite von dem Hörer 106 aus betrachtet eine weitere akustische Apertur mit einem weiteren Hochtonlautsprecher angeordnet sein kann. In diesem Fall kann es sich bei dem in Fig. 1 oberen Hochtonlautsprecher um einen handeln, der einem linken Stereokanal zugeordnet ist, wohingegen der in Fig. 1 untere dem rechten Stereokanal zugeordnet wäre. Bei einer alternativen Ausführungsform könnten anstelle der seitlichen zwei Aperturen eine am oberen Rand des Lautsprechergehäuses und eine weitere am unteren Rand des Lautsprechergehäuses vorgesehen sein, um auf diese Weise einen Monolautsprecher zu bilden.

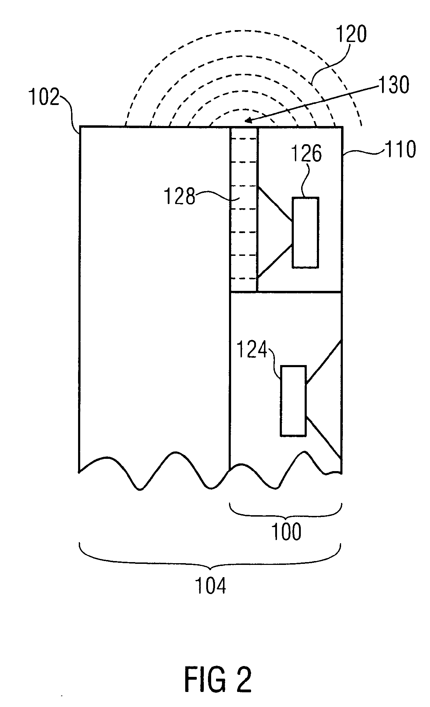

Bezug nehmend auf Fig. 2 wird nun im Folgenden eine Möglichkeit dafür beschrieben, wie die akustische Apertur, die Schallführung und der zugeordnete Lautsprecher in dem Gehäuse gebildet bzw. angeordnet sein könnten. Fig. 2 zeigt eine vergrößerte Teilschnittansicht von oben auf den Flachlautsprecher. Bezüglich der Bezugszeichen wird noch einmal darauf hingewiesen, dass die gleichen Bezugszeichen verwendet worden sind wie in Fig. 1, soweit gleiche oder funktionsgleiche Elemente betroffen sind. Bezüglich dieser Elemente wird auf die vorhergehende Figurenbeschreibung verwiesen. Dieser Hinweis gilt im Folgenden auch für die Beschreibung der nachfolgenden Figuren.

In Fig. 2 ist ein Mittel- oder Tieftonlautsprecher 124 zu sehen, der an der Vorderseite 110 des Flachlautsprechers 100 angeordnet ist, um von der Vorderseite 110 weg, d.h. in Richtung der Flächen-Normalen der Vorderseite 110, nach hinten, d.h. von dem Hörer weg zu strahlen. Selbiger kann Teil eines Arrays sein, wie es im Vorhergehenden beschrieben worden ist. Lateral noch weiter außen ist in Fig. 2 ein Hochtonlautsprecher 126 zu sehen, der aber nicht nach außen, sondern in das Gehäuseinnere abstrahlt. Zur Erzielung einer flachen Bauform des Lautsprechergehäuses ist auch dieser Lautsprecher mit seiner Membranflächennormalen parallel oder antiparallel zu den Membrannormalen der Lautsprecher 124 angeordnet. Obwohl der Lautsprecher 126 auch in der Rückseite des Lautsprechers, d.h. in dem Teil des Gehäuses, der dem Hörer und dem TV 102 zugewandt ist, untergebracht sein könnte, d.h. mit seiner Membrannormalen parallel und in die gleiche Richtung weisend wie die Lautsprecher 124, ist der Lautsprecher 126 in Fig. 2 so angeordnet, dass er in Richtung des Hörers abstrahlt, d.h. er ist an die Vorderwand 110 des Gehäuses angebracht bzw. in dieselbe eingefasst, wie z.B. in eine entsprechend Bohrung, und strahlt in das Gehäuseinnere, nämlich die Schallführung 128, in Richtung der Gehäuserückwand. In diesem Fall sind alle Lautsprecher in die gleiche Wand, nämlich die Vorderwand 110 des Gehäuses verbaut, wie z.B. in jeweilige Bohrungen oder Vertiefungen. In anderen Worten ausgedrückt, bilden die Rückseite des Displays 102 und ein in Fig. 2 nicht gesondert dargestellter Rahmen für die Lautsprecher 124, 126 zusammen ein Gehäuse mit einem Schlitz bzw. Spalt 128, in welchem der Hochtonlautsprecher 126 den von demselben erzeugten Hochtonschall 120 abstrahlt. Der Spalt 128 fungiert somit als Schallführung, die mit einem schallleitenden Medium, in dem vorliegenden Fall nämlich Luft, gefüllt ist und den Schall 120 seitlich am Gehäuse nach außen führt, d.h. zu der akustischen Apertur 130, an der sich die Schallführung 128 öffnet. Fig. 2 zeigt also ein Beispiel für einen Flachlautsprecher mit einem Gehäuse und einem Lautsprecher 126 in demselben sowie eine Schallführung, die Schall 120 von dem Lautsprecher 126 über eine akustische Apertur 130 in dem Gehäuse für eine ungerichtete Abstrahlung nach außen führt. Wie es in Fig. 2 zu sehen ist, ist die Größe der akustischen Apertur kleiner als ein Lautsprechermembrandurchmesser 126 des Lautsprechers, und der Hochtonfrequenzbereich, für dessen Abstrahlung der Lautsprecher 126 gemäß einer vorgeschalteten Frequenzweiche zuständig ist, besitzt beispielsweise eine größte Frequenz mit einer Wellenlänge, die größer als die akustische Apertur 230 ist. In dem Fall von Fig. 2 ist die ungerichtete Abstrahlung nach Art einer zylinderförmigen Schallausbreitung veranschaulicht worden.

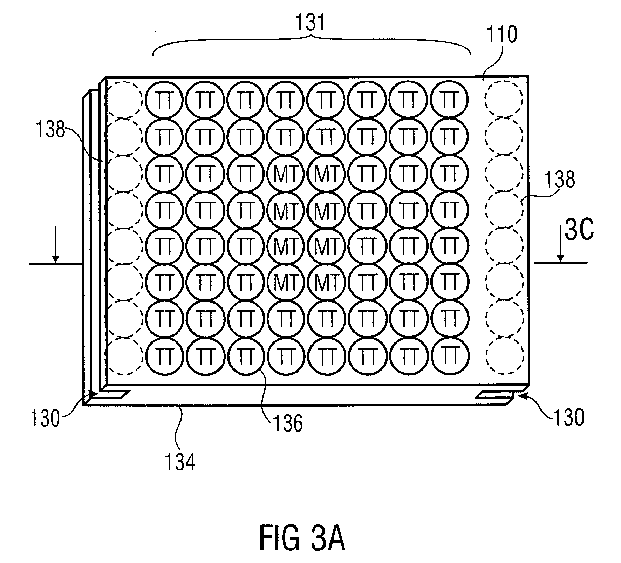

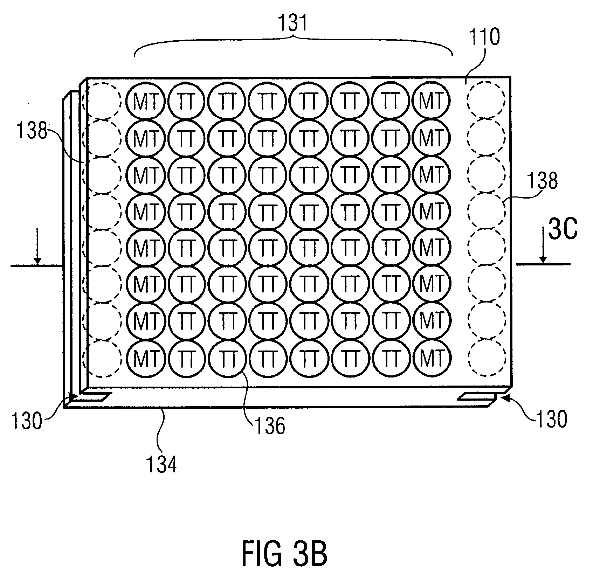

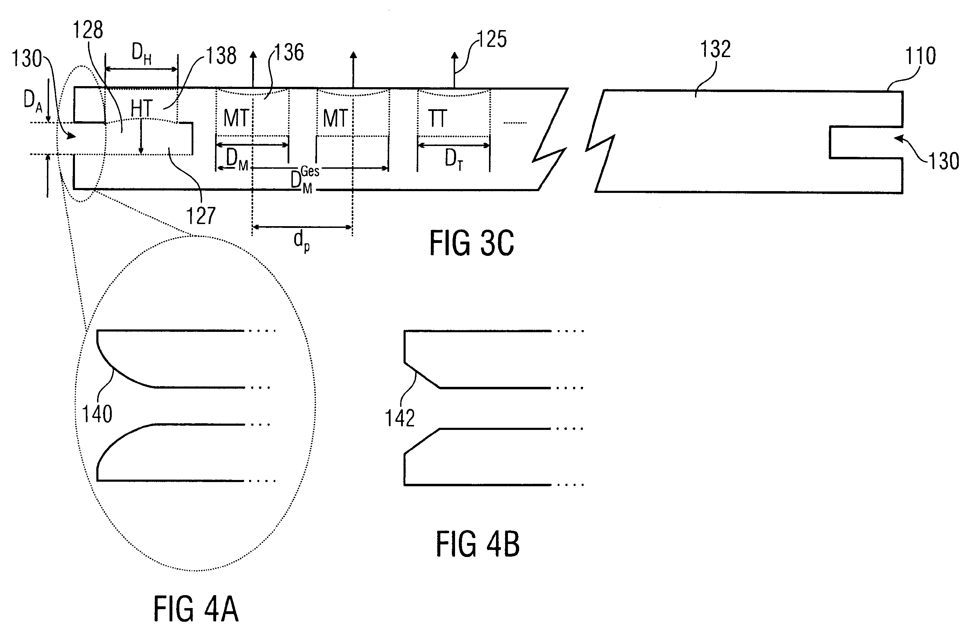

Wie es bereits bei Fig. 2 angedeutet worden ist, kann der Mittelton- und/oder Tieftonlautsprecher 124 Teil einer zweidimensionalen Verteilung von elektroakustischen Wandlern gebildet sein. In anderen Worten ausgedrückt, kann der Flachlautsprecher 100 auch eine zweidimensionale Verteilung von elektroakustischen Wandlern als Mittelton- und/oder Tieftonlautsprecher aufweisen. Dies ist in Fig. 3a gezeigt. Gemäß diesem Ausführungsbeispiel umfasst der Flachlautsprecher lateral in einem Flächeninneren 131 der Vorderseite 110 des Gehäuses, das in Fig. 3a allgemein mit 134 angezeigt ist, eine zweidimensionale Verteilung von elektroakustischen Wandlern 136, die vorgesehen sind, um von der Vorderseite 110 weg nach außen zu strahlen. Wie es in Fig. 3 a gezeigt ist, können die Lautsprecher beispielsweise regelmäßig in Zeilen und Spalten angeordnet sein.

Bei dem Ausführungsbeispiel von Fig. 3a handelt es sich bei dem Flachlautsprecher um einen 3-Wege-Lautsprecher, bei dem ein Teil - vorzugsweise ein überwiegender Teil - der elektroakustischen Wandler 136 als Tieftonlautsprecher fungieren, wohingegen ein restlicher Teil der Verteilung von Wandlern in dem Bereich 131 als Mitteltonlautsprecher fungiert, wie es mit "TT" bzw. "MT" angezeigt ist. Hier in Fig. 3a sind die Mitteltonlautsprecher inmitten der Einzellautsprecher 136 angeordnet, wobei sie von den Tieftonlautsprechern umgeben werden. Nachfolgend wird noch ein Ausführungsbeispiel beschrieben, bei dem dies andersherum ist.

Eine entsprechende Frequenzweiche übernimmt eine unterschiedliche Ansteuerung bzw. eine Ansteuerung der Tiefton- bzw. Mitteltonlautsprecher mit einem unterschiedlichen Frequenzbereich eines wiederzugebenden Audiosignals, wie es später Bezug nehmend auf Fig. 5 beschrieben wird. Es wird jedoch darauf hingewiesen, dass jede andere mehrdimensionale Verteilung von Wandlern 136 ebenfalls möglich ist, ebenso wie das Vorsehen von lediglich Mitteltonlautsprechern oder Tieftonlautsprechern, um einen 2-Wege-Flachlautsprecher zu bilden. Beispielsweise könnten die elektroakustischen Wandler 136 in einer dichtesten Kugelpackung, d.h. in einem hexagonalen Gitter angeordnet sein, um eine dichtere Anordnung der Wandler zu ermöglichen. Die Ansteuerung der Wandler 136 kann in einer rein parallelen Verschaltung, einer rein seriellen Verschaltung oder einer gemischt seriell/parallelen Verschaltung erfolgen. Für nähere Details bezüglich Aufbau und Verschaltung der Wandler wird auf die in der Beschreibungseinleitung erwähnte FLS Technologie verwiesen.

Fig. 3a zeigt auch, dass auch der Hochtonlautsprecher aus vielen elektroakustischen Wandlern 138 aufgebaut sein kann, und zwar als Linienschallquelle, deren Längsachse entlang der Apertur 130 verläuft. Fig. 2 zeigte somit beispielsweise eine Teilschnittansicht von oben des Ausführungsbeispiels von Fig. 3a, bei denen lediglich ein Wandler 136 und ein Wandler 138 zu sehen war. Fig. 3a zeigt auch, dass die zum Hochtonlautsprecher gehörenden akustischen Wandler 138 entlang eines seitlichen Rands bzw. Umfangs der Vorderseite 110 angeordnet sind, der das Flächeninnere 131 umgibt - nämlich von zwei Seiten, nämlich links und rechts in Fig. 3a. In noch einmal anderen Worten ausgedrückt, sind bei dem Ausführungsbeispiel von Fig. 3a die Mittelton- und Tieftonwandler 136 lateral im Inneren 131 der Vorderseite 110 angeordnet. An zwei gegenüberliegenden Umfangseiten der in Fig. 3a exemplarisch rechteckigen Vorderseite 110 sind jeweils entlang einer Linie die Wandler 138 angeordnet, um eine Linienschallquelle für beispielsweise einen linken Stereokanal und eine Linienschallquelle für einen rechten Stereokanal zu bilden, wobei die Mittel- und Tieftonwandler 136 zwischen den Hochtonwandlern 138 angeordnet sind bzw. von denselben umgeben werden.

Fig. 3b zeigt eine alternative Verteilung von Mittel- und Tieftonlautsprechern 136. Gemäß Fig. 3b sind die Mitteltöner (MT) am äußeren Rand, d.h. links und rechts, des Arrays platziert, um auch in dem diesen Mitteltönern zugeordneten Frequenzbereich eine Stereowahrnehmung zu ermöglichen und somit einen bessere Stereo-Trennung zu erreichen. Die Mitteltöner bilden hier jeweils eine Linienschallquelle entlang des linken und rechten Rands der Vorderseite 110. Sie könnten aber jeweils auch mehr als eine Spalte von Mitteltönern aufweisen. Die Tieftonlautsprecher (TT) sind dazwischen angeordnet. Sie bilden somit ein geschlossenes zweidimensionales Feld von Tieftoneinzellautsprechern. Aufgrund der größeren Wellenlängen des Tieftonfrequenzbereiches verglichen zu den Wellenlängen des Hochton- und Mitteltonbereichs ist die laterale Gesamtausdehnung des Tieftonlautsprecherfeldes kleiner als die abgestrahlten Tieftonwellenlängen und somit wird der Tieftonschall ungerichtet abgestrahlt.

Ebenso ist die horizontale Ausdehnung der beiden Mitteltoneinzellausprecherarrays kleiner als die Wellenlänge der unteren Grenzfrequenz des Mitteltonfrequenzbands, und der Mitteltonschall wird ungerichtet abgestrahlt - zumindest in der Horizontalen. Dies ist noch einmal in Fig. 3c veranschaulicht, wobei D^{Ges}_{M} die horizontale Gesamtausdehnung eines hier exemplarisch zweispaltigen Mitteltonlautsprecherarrays für den rechten Stereokanal zeigt. Er ist kleiner als die kleinste Wellenlänge des Mitteltonspektralbereichs. Der mittlere Nächstnachbarmittenabstand dp der Lautsprecher 136 ist auch gezeigt. Er kann für die Mitteltöner und die Tieftöner gleich sein. Insbesondere kann er beispielsweise kleiner 2 D_{T/M} und noch etwas bevorzugter kleiner 1,5 D_{T/M} sein, oder sogar kleiner 1,2 D_{T/M}. Die laterale Abmessung bzw. der Durchmesser der Lautsprechermembran des Hochtonlautsprechers 138, nämlich D_{H} kann in dem gleichen Bereich wie D_{T/M} liegen und sogar gleich zu D_{T/M} sein. Die Größe D_{A} der akustischen Apertur 130 ist vorzugsweise kleiner als ¾ D_{H} und noch bevorzugter kleiner als D_{H}/2 oder sogar kleiner D_{H}/4.

Fig. 3c zeigt, dass die Membran-Normale 127 des Hochtonlautsprechers 126 in das Gehäuse 132 und die Membran-Normale 125 der Mittelton- und Tieftonlautsprecher 124 entgegengesetzt dazu von dem Gehäuse 132 weg zeigen, so dass der Hochtonlautsprecher 126 den Schall 120 in die Schallführung 128 in dem Gehäuse 132 abstrahlt und die Mittelton- und Tieftonlautsprecher 124 Schall von dem Gehäuse 132 weg abstrahlen. Wie oben bereits erwähnt, wäre es auch möglich, dass die Hochtöner (HT) in der Rückwand vorgesehen sind, um ins Innere bzw. die Schallführung abzustrahlen - dann in die gleiche Richtung wie die Mittel- und Tieftöner.

Bezüglich Fig. 3b und 3c wird noch auf folgende Möglichkeit hingewiesen. Die ungerichtete seitliche Abstrahlung des Hochtons durch die Hochtöner ist bei den Anwendungen, bei denen die Rückwand des Flachlausprechers dem Hörer zugewandt ist, eigentlich nur in Richtung Hörer erwünscht. Leider gelangen Schallanteile auch an eine evtl. vom Hörer aus gesehen hinter dem Fernseher stehende Reflexionsfläche (Wand). Bei einer Reflexion wird dieser Schallanteil evtl. zum Hörer umgelenkt und überlagert sich schlimmsten Falls mit den direkt zum Hörer hin gebeugten Schallanteilen destruktiv. Abhilfe wäre möglich, wenn ein Teil der Mitteltonlautsprecher MT zusätzlich ein gerichtetes, gegenphasiges Signal abstrahlt und es so zu einer Auslöschung des störenden Hochtonanteils kommt. So könnte jeweils die äußerste Spalte von Mitteltönern MT in Fig. 3b bzw. 3c auf der linken und rechten Seite jeweils nicht nur mit dem Mitteltonzweigsignal, sondern auch mit dem Hochtonzweigsignal des jeweiligen Stereosignals beaufschlagt werden, jeweils mit einem geeigneten Phasenversatz, um einen Phasenversatz zu dem Hochtonschall, der die benachbarte Apertur 130 verlässt, aufgrund von Laufzeitunterschieden und einer evtl. Phasenumkehr an Beugungspunkten auszugleichen. In diesem Fall ist es auch nicht schädlich, wenn die Wellenlängen des Hochtonbereichs so klein sind, dass keine ungerichtete Abstrahlung durch die Mitteltöner mehr möglich ist. Im Gegenteil soll in diesem Fall der Hochtonschall ja gezielt denjenigen Schall ausgleichen, der von der Apertur 130 aus in Abstrahlrichtung der Mitteltöner auf eine eventuelle Wand stoßen könnte. Die laterale Ausdehnung des zusätzlich mit dem Hochtonsignals beaufschlagten Mitteltonarrays auf der rechten und linken Seite liegt deshalb bevorzugter Weise im Bereich der Wellenlänge der kleinsten Frequenz der Hochtonanteils. Beispielsweise ist sie kleiner als die untere Hochtongrenzfrequenzwellenlänge. Der Abstand der Mitte des Feldes von Mitteltönern, die mit dem phasenversetzten Hochtonsignal angesprochen werden, von dem Rand der Vorderseite 110, an der die Apertur 130 gebildet ist, aus welcher der auszulöschende Hochtonschallanteil dringt, ist beispielsweise kleiner als 2 D_{H}.

Bezug nehmend auf die Fig. 3a und 3b wird noch darauf hingewiesen, dass, obwohl in dem Ausführungsbeispiel dieser Figuren die Schallführung jeweils in Form einer durchgehenden Nut in dem linken und rechten Rand des Gehäuses gebildet war, auch andere Schallführungen möglich wären, nämlich in Form eines Schlitzes, der sich oben und unten in Fig. 3 a nicht öffnet, sondern eben nur links und rechts an der Gehäuseseite. Auch wird darauf hingewiesen, dass obige Ausführungen einfach auf einen 2-Wege Fall übertragbar sind, indem beispielsweise die Mitteltöner und Tieftöner den Tieftonanteil des 2-Wege-Lautsprechers übernehmen. Die linke Hälfte derselben könnten mit dem einen und die andere Hälfte mit dem anderen Stereosignal angesprochen werden. Allerdings wäre auch ein Monotieftonsignal möglich. Soeben beschriebene Hochtonschallauslöschung für Hochtonschall, der die Apertur in Richtung weg vom Hörer verlässt, wäre auch auf Monolautsprecherausführungsbeispiele übertragbar. Ferner könnte der für die Auslöschung vorgesehene Hochtonanteil sowohl an Mitteltöner als auch an Tieftöner angelegt werden, wie z.B. an die äußerste Spalte Mitteltöner in Fig. 5b und die dazu benachbarte äußerste Spalte Tieftöner.

Fig. 4a zeigt, dass die in Form eines Schlitzes gebildete Apertur 130 in dem Gehäuse so gebildet sein kann, dass der Schlitz sich zur Unterdrückung von Stehwelligkeiten in dem Schlitz nach außen hin im Querschnitt weiten kann. Gemäß Fig. 4a weist der Schlitz an der Stelle, an der sich derselbe nach außen hin in dem Gehäuse öffnet, eine Rundung 140 und gemäß Fig. 4b eine Fase bzw. Abschrägung 142 auf, die in dem Gehäuse gebildet ist. Absorptionsmaterial könnte am Schlitzausgang vorgesehen sein, um Stehwelligkeiten zu verringern.

Im Vorhergehenden ist es häufig beschrieben worden, dass der Lautsprecher mit der Schallführung und der akustischen Apertur als Hochtonlautsprecher fungieren könne, dem ein Mittelton- und/oder ein Tieftonlautsprecher nebengeordnet sind, um einen 2-Wege, 3-Wege oder Mehr-Wegeflachlautsprecher zu ergeben. In Fig. 5 ist eine mögliche Ansteuerschaltung gezeigt, die bei diesen Ausführungsbeispielen verwendet werden kann, um aus einem eingehenden Audiosignal an einem Audiosignaleingang 144 entsprechende Wege-Signale an entsprechenden Ausgängen 146 auszugeben. Die Ansteuerschaltung von Fig. 5 umfasst eine Frequenzweiche 148, die mit ihrem Eingang an den Eingang 144 angeschlossen ist und für jeden Weg einen Ausgang besitzt, d.h. für den Hochtonweg, Mitteltonweg und Tieftonweg. Die Frequenzweiche 148 ist ausgebildet, um das gesamte Frequenzspektrum des eingehenden Audiosignals 144, von beispielsweise 20Hz bis 20000 Hz in entsprechende Frequenzbänder aufzuteilen, wie z.B. in einen Hochtonbereich, Mitteltonbereich und Tieftonbereich, die aneinander angrenzen bzw. einander nur geringfügig überlappen. Eine weitere Möglichkeit besteht darin, dass alle Wandler 136 den Tiefton wiedergeben und eine Teilmenge davon zusätzlich das Mittelton-Signal. Der Hochtonfrequenzbereich besitzt beispielsweise eine untere Grenzfrequenz von 1000 Hz mit einer zugehörigen Schallwellenlänge von 34cm, die somit größer ist als obige Abmessungsangabe für die akustische Apertur. Eine obere Grenzfrequenz für den Mittelton und/oder Tieftonbereich kann wiederum 1000 Hz sein, wobei die zugehörige Wellenlänge des Schalls wieder groß genug ist, um bei den obigen Angaben für laterale Abmessungen der entsprechenden Mittel- und/oder Tieftonlautsprecher-Arrays eine ungerichtete Abstrahlung zu ergeben. An die entsprechenden Ausgänge der Frequenzweiche 148 können sich, wie es in Fig. 5 gezeigt ist, jeweils seriell hintereinander geschaltet ein Entzerrer 150 und ein Verstärker 152 anschließen, um zwischen den jeweiligen Ausgang der Frequenzweiche 148 und den jeweiligen Wege-Ausgang 146 geschaltet zu sein. Wie gesagt kann das Tieftonsignal parallel, seriell oder gemischt parallel/seriell an die Tieftonlautsprecher gelegt werden, und selbiges gilt ebenso für die Mitteltonlautsprecher und die Hochtonlautsprecher.

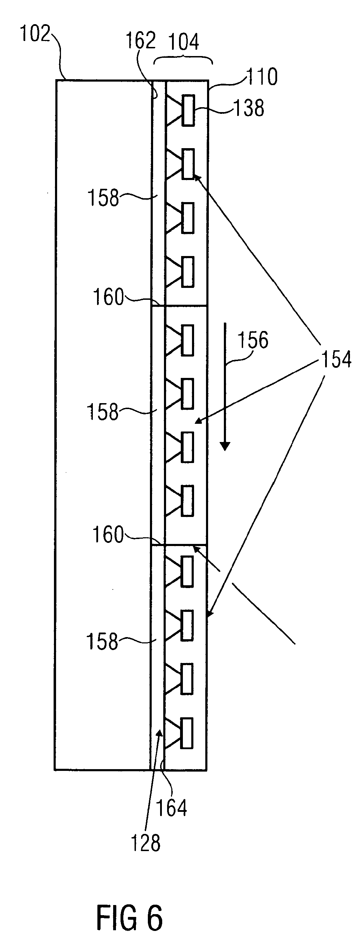

Fig. 6 zeigt eine Seitenansicht eines Flachlautsprechers, der gegenüber demjenigen von Fig. 3a darin modifiziert ist, dass die in einer Linie angeordneten elektroakustischen Wandler 138 nicht ein gemeinsames Linienarray bzw. eine gemeinsame Linienschallquelle bilden, sondern dass dieselben in Linienrichtung in Linien-Array-Elemente 154 unterteilt sind, indem nämlich auch die zugeordnete Schallführung bzw. der zugeordnete Schlitz 128, in die die Wandler 138 abstrahlen, entlang der Linienrichtung 156 unterteilt ist, um einzelne Kammern 158 zu bilden, wie z.B. durch entsprechende Stege 160, die sich von einer Innenseite 162 der näher am Display 102 bzw. weiter vorn angeordneten Wand über die Schlitzbreite zu einer gegenüberliegenden Innenseite 164 einer dem weiter vom Display weg angeordneten Wand des Gehäuses erstrecken und in lateraler Richtung quer zur Anordnungsrichtung 156 verlaufen, um den Schlitz 128 somit in die vorerwähnten Kammern 158 zu trennen, in die die einzelnen Linien-Array-Elemente 154 abstrahlen. Die Unterteilung ermöglicht es, Stehwelligkeiten, die sich in der Anordnungsrichtung 156 andernfalls ausbilden könnten, zu vermeiden, indem die Resonanzfrequenz erhöht wird.

Im Nachfolgenden sollen obige Ausführungsbeispiele noch einmal in anderen Worten zusammengefasst werden. Den obigen Ausführungsbeispielen war gemein, dass die Aperturgröße gegenüber der Wellenlänge verkleinert wurde, so dass Schall ungerichtet abgestrahlt wird. Bei den obigen Ausführungsbeispielen war dies für den Schall des Hochtonlautsprechers so. Aber natürlich sind auch Ausführungsbeispiele möglich, bei denen der Flachlautsprecher nicht als Mehr-Wege-Lautsprecher ausgebildet ist, so dass nur allgemein von einem Lautsprecher die Rede sein kann.

Bei obigen Ausführungsbeispielen handelte es sich auch stets um Flachlautsprecher, die Rücken an Rücken an ein Display montiert waren. Die Existenz eines Displays ist allerdings nicht zwingend nötig. Andere Ausführungsbeispiele sehen beispielsweise vor, dass die Rückseite des Lautsprechers, d.h. die Rückseite des Gehäuses des Flachlautsprechers anders genutzt wird, wie z.B. als Tafel oder Projektionsebene für einen Projektor. In diesem Fall könnten die vorhergehenden Bezugszeichen 102 die Rückwand des Gehäuses bilden, die dem Gestell mit den Lautsprechern gegenüber liegt. Mit dem Wegfall eines Displays würde auch bei anderen Ausführungsbeispielen die Definition für Vorder- und Rückseite des Flachlautsprechers aufgeweicht werden. Da die Hochtonlautsprecher der obigen Ausführungsbeispiele in das Gehäuseinnere abstrahlen und die Mittelton- und/oder Tieftonlautsprecher nach außen, kann die Seite 110 als Vorderseite betrachtet werden, wie es im Vorhergehenden auch getan wurde. Allerdings ist es auch möglich, die Seite 110 als Rückseite zu betrachten, wenn man nämlich die Anwendung betrachtet, bei der ja diese Seite dem Hörer abgewandt sein soll. Allerdings wird darauf hingewiesen, dass obige Ausführungsbeispiele für Flachlautsprecher grundsätzlich natürlich auch anders herum einsetzbar wären, d.h. mit den Mittelton und/oder Tieftonlautsprechern den Hörern zugewandt.

Bei den obigen Ausführungsbeispielen war zudem, der mit der Schallführung wechselwirkende Lautsprecher als eine Linienschallquelle aus vielen kleinen elektroakustischen Wandlern ausgebildet. Wie es im Vorhergehenden gezeigt wurde, kann die akustische Apertur bzw. der Adapter bzw. die Schallführung in Form eines Schlitzes zur Erzielung der ungerichteten Abstrahlung ausgebildet sein. Die Schlitzgröße kann in einer Dimension wesentlich kleiner als die Wellenlänge der höchsten ungerichtet abzustrahlenden Frequenz vorgesehen sein, wie es im Vorhergehenden beschrieben wurde. Die Schallführung in Form eines Schlitzes kann mit einem geeigneten schallleitenden Medium gefüllt sein. Bei den vorhergehenden Ausführungsbeispielen war dies exemplarisch Luft. Allerdings könnte es sich bei dem schallleitenden Medium auch um einen Festkörper für eine Körperschallleitung handeln. Zur Unterdrückung der bekanntermaßen in schlitzförmigen Anordnungen auftretenden Stehwelligkeit, kann der Schlitz nach außen im Querschnitt geweitet werden, wie es Bezug nehmend auf die Fig. 4a und 4b gezeigt wurde, ähnlich einem Horn (vgl. Fig. 4a). Alternativ oder zusätzlich könnte Dämmmaterial an geeigneter Stelle im Schlitz angebracht werden, wie z.B. im Schnellemaximum. Zudem wäre es möglich, die Treiber 138 geeignet zu positionieren, wie z.B. im Knoten einer Schwingungsmode. Vorteilhaft ist ebenso eine vertikale Unterteilung des Schlitzes in kleinere Kammern zur Verschiebung der Grundresonanz zu höheren Frequenzen, wie es im Folgenden Bezug nehmend auf Fig. 6 beschrieben worden ist. Bei dem Ausführungsbeispiel von Fig. 6 bildeten die Hochton-Treiber ein Linienarray, dort nämlich 12 Treiber. Sie waren in drei Vierer-Gruppen unterteilt und im geschlossenen Gehäuse aus Wand 162, gegenüberliegender Wand 110 und den seitlichen Rändern angeordnet. Das Gehäuse besaß einen Schlitz eine akustische Apertur 130. Mittelton und Tiefton strahlten rund nach hinten. Ebenso wie der Schlitz eine Rundung aufweisen kann, wie es in Fig. 4a gezeigt worden ist, also beispielsweise wie ein Exponentialtrichter eines Hornlautsprechers, kann der Schlitz auch mit einer Fase versehen sein bzw. abgeschrägt sein, wie es in Fig. 4b gezeigt wurde. Alternative Ausführungsbeispiele umfassen keinen Schlitz als akustische Apertur, sondern Löcher.

Bezug nehmend auf vorhergehende Ausführungsbeispiele wird noch darauf hingewiesen, dass die laterale Flächenform des Flachlautsprechers, nämlich ein Rechteck, nur exemplarisch war. Andere Formen sind natürlich ebenfalls möglich, wie z.B. andere Polygonformen oder runde Formen. Bei dem Ausführungsbeispiel von Fig. 6 fand die Trennung der Linien-Array-Elemente und die akustische Apertur in vertikaler Richtung statt. Ebenso könnte aber natürlich der Flachlautsprecher auch anders aufgestellt bzw. aufgebaut werden, in welchem Fall die Unterteilung in horizontaler Richtung stattfände und sich die Schlitze horizontal erstreckten. Ferner ist es möglich obige Linienlautsprecher nicht etwa diskret aus einzelnen Lautsprechern aufzubauen, die in einer Linie angeordnet sind, sondern gleich aus einem Linienschallwandler. Überhaupt kommen als obige Einzellautsprecher Miniaturlausprecher in Betracht, wie sie beispielsweise in Kopfhörern verwendet werden.

Zusammenfassend zeigten also obige Ausführungsbeispiele unter anderem einen Flachlautsprecher miteinem Gehäuse 132, einem Lautsprecher 126 in dem Gehäuse 132 und einer Schallführung 128, die ausgebildet ist, um Schall 120 von dem Lautsprecher 126 über eine akustische Apertur 130 in dem Gehäuse 132 für eine ungerichtete Abstrahlung 123 nach außen zu führen. Dabei kann die Schallführung 128 mit einem schallleitenden Medium gefüllt sein, wobei wiederum das schallleitende Medium Luft oder ein Festkörper sein kann. Der Schlitz in dem Gehäuse (132) kann sich zur Unterdrückung von Stehwelligkeiten in der Schallführung (128) nach außen im Querschnitt weiten, wobei der Schlitz eine Fase 142 oder eine Rundung 140 aufweist kann, um sich nach außen zu weiten. Die Schallführung 128 kann zur Verschiebung einer Grundresonanz in kleinere Kammern 158 unterteilt sein. Der Flachlautsprecher kann so ausgebildet sein, dass der Hochtonlautsprecher 126 oberhalb von 100 oder oberhalb 200 Hz abstrahlt.

## Patentansprüche

1. Flachlautsprecher mit
einem Gehäuse (132) mit einer flachen Bauform, einer Vorderseite und einer Rückseite (110);
einem Hochtonlautsprecher (126) in dem Gehäuse (132);
einem Mitteltonlautsprecher und/oder einem Tieftonlautsprecher (124), der/die angeordnet ist/sind, um von der Rückseite (110) des Gehäuses (133) weg nach außen abzustrahlen; und
einer Schallführung (128), die ausgebildet ist, um Schall (120) von dem Hochtonlautsprecher (126) über eine akustische Apertur (130) in dem Gehäuse (132) nach außen zu führen, wobei die akustische Apertur (130) in Form eines Schlitzes seitlich in dem Gehäuse (132) gebildet ist, um weder nutzbare Fläche an der Vorderseite noch an der Rückseite (110) des Gehäuses wegzunehmen, so dass der Schall des Hochtonlautsprechers (126) nahezu zylinderförmig abgestrahlt wird, wobei
der Hochtonlautsprecher (126) aus entlang einer Linie angeordneten elektroakustischen Wandlern als Linienschallquelle mit einer Längsachse entlang der Apertur ausgebildet ist.

2. Flachlautsprecher gemäß Anspruch 1, bei dem eine Größe der akustischen Apertur (130) kleiner als ein Lautsprechermembrandurchmesser des Hochtonlautsprechers (126) ist.

3. Flachlautsprecher gemäß Anspruch 1 oder 2, bei dem eine Größe der akustischen Apertur (130) kleiner als eine Wellenlänge einer höchsten Frequenz des Schalls (120) von dem Hochtonlautsprecher (126) ist.

4. Flachlautsprecher gemäß einem der vorhergehenden Ansprüche, wobei der Hochtonlautsprecher (126) und der Mitteltonlautsprecher und/oder Tieftonlautsprecher (124) mit ihren Membranflächen-Normalen parallel oder antiparallel zueinander angeordnet sind.

5. Flachlautsprecher gemäß einem der vorhergehenden Ansprüche, bei dem die Membran-Normale (127) des Hochtonlautsprechers in das Gehäuse (132) zeigt, so dass der Hochtonlautsprecher (126) den Schall (120) in die Schallführung (128) in dem Gehäuse (132) abstrahlt.

6. Flachlautsprecher gemäß einem der Ansprüche 1 bis 5, wobei eine Membran-Normale (125) des Mittelton- und/oder Tieftonlautsprechers (124) entgegengesetzt zu der Membran-Normalen (127) des Hochtonlautsprechers von dem Gehäuse (132) weg zeigt, so dass der Hochtonlautsprecher (126) den Schall (120) in die Schallführung (128) in dem Gehäuse (132) abstrahlt und der Mittelton- und/oder Tieftonlautsprecher (124) Schall von dem Gehäuse (132) weg abstrahlt.

7. Flachlautsprecher gemäß einem der Ansprüche 1 bis 6, bei dem der Hochtonlautsprecher einem linken Stereokanal zugeordnet ist und der Flachlautsprecher ferner einen weiteren Hochtonlautsprecher, der einem rechten Stereokanal zugeordnet ist, und eine weitere Schallführung, die ausgebildet ist, Schall von dem weiteren Hochtonlautsprecher über eine weitere akustische Apertur in dem Gehäuse (132) für eine weitere ungerichtete Abstrahlung seitlich nach außen zu führen, aufweist, wobei die akustischen Aperturen räumlich getrennt an gegenüberliegenden Umfangsseiten des Gehäuses (132) gebildet sind.

8. Flachlautsprecher gemäß einem der Ansprüche 1 bis 7, bei dem der Mitteltonlautsprecher und/oder Tieftonlautsprecher lateral in einem Flächeninneren (132) der Rückseite (110) des Gehäuses (132) angeordnet sind, wobei der Hochtonlautsprecher (126) entlang eines seitlichen Rands angeordnet ist, der das Flächeninnere (132) umgibt.

9. Flachlautsprecher gemäß einem der Ansprüche 1 bis 8, bei dem der Mitteltonlautsprecher und/oder Tieftonlautsprecher (124) aus einer zweidimensionalen Verteilung von elektroakustischen Wandlern (136) gebildet ist.

10. Flachlautsprecher gemäß einem der vorhergehenden Ansprüche, bei dem der Flachlautsprecher ein Display (102) an der Vorderseite des Gehäuses (132) aufweist.

11. Flachlautsprecher gemäß Anspruch 10, bei dem das Display (102) eine laterale Ausdehnung besitzt, so dass eine Projektion eines Bildanzeigebereichs des Displays (102) entlang einer Dickerichtung des Gehäuses mit dem Hochtonlautsprecher (126) überlappt.

12. Flachlautsprecher gemäß einem der vorhergehenden Ansprüche, der ferner einen nach außen abstrahlender Lautsprecher aufweist, der in der Rückseite (110) des Gehäuses benachbart zu der akustischen Apertur (130) gebildet ist, und mit einem ersten Hochtonsignal angesteuert wird, das zu einem zweiten Hochtonsignal, mit dem der Hochtonlautsprecher in dem Gehäuse angesteuert wird, phasenversetzt ist, um eine destruktive Überlagerung mit Schall des Lautsprechers in dem Gehäuse zu bewirken, der die akustische Apertur in einer Richtung verlässt, in die die Rückseite (110) weist.

13. Flachlautsprecher gemäß Anspruch 12, bei dem der in der Rückseite (110) des Gehäuses gebildete Lautsprecher ein weiterer Mittelton- oder Tieftonlautsprecher ist, der zusätzlich zu dem ersten Hochtonsignal mit einem Mittelton- oder Tieftonsignal angesteuert wird.

14. Flachlautsprecher gemäß einem der Ansprüche 1 bis 11, bei dem der von dem Hochtonlautsprecher (126) erzeugte und die akustische Apertur in einer Richtung, in die die Rückseite (110) weist, verlassende Schall durch ein gerichtetes, gegenphasiges Signal von einem Feld von nach außen abstrahlenden, in der Rückseite (110) des Gehäuses benachbart zu der akustischen Apertur (130) gebildeten Mitteltonlautsprechern auslöschbar wäre, wenn dasselbe mit einem ersten Hochtonsignal angesteuert werden würde, das zu einem zweiten Hochtonsignal, mit dem der Hochtonlautsprecher in dem Gehäuse angesteuert wird, phasenversetzt ist, um eine destruktive Überlagerung mit dem Schall des Lautsprechers in dem Gehäuse zu bewirken, der die akustische Apertur in der Richtung verlässt, in die die Rückseite (110) weist.

15. Fernseher oder Flachbildschirm mit einem Flachlautsprecher gemäß einem der vorhergehenden Ansprüche.

## Claims

1. A flat loudspeaker, comprising
a housing (132) having a flat structural form, a front side and a backside (110);
a high-frequency loudspeaker (126) in the housing (132);
a mid-frequency loudspeaker and/or low-frequency loudspeaker (124) that is/are arranged to emit away from the backside (110) of the housing (133) to the outside; and
a sound guide (128) which is implemented to guide sound (120) from the high-frequency loudspeaker (126) via an acoustic aperture (130) in the housing (132) to the outside, wherein the acoustic aperture (130) is formed in the form of a slot laterally in the housing (132) to take away useable area neither on the front side nor on the backside (110) of the housing, such that the sound of the high-frequency loudspeaker (126) is emitted virtually cylindrically, wherein
the high-frequency loudspeaker (126) is implemented of electro-acoustic transducers arranged along a line as line sound source having a longitudinal axis along the aperture.

2. The flat loudspeaker according to claim 1, wherein a size of the acoustic aperture (130) is smaller than a loudspeaker membrane diameter of the high-frequency loudspeaker (126).

3. The flat loudspeaker according to claim 1 or 2, wherein a size of the acoustic aperture (130) is smaller than a wavelength of a highest frequency of the sound (120) from the high-frequency loudspeaker (126).

4. The flat loudspeaker according to one of the preceding claims, wherein the high-frequency loudspeaker (126) and the mid-frequency loudspeaker and/or low-frequency loudspeaker (124) are arranged parallel or anti-parallel to each other regarding their membrane area normals.

5. The flat loudspeaker according to one of the preceding claims, wherein the membrane normal (127) of the high-frequency loudspeaker is directed into the housing (132) so that the high-frequency loudspeaker (126) emits the sound (120) into the sound guide (128) in the housing (132).

6. The flat loudspeaker according to one of claims 1 to 5, wherein a membrane normal (125) of the mid-frequency and/or low-frequency loudspeaker (124) is directed in an opposite direction to the membrane normal (127) of the high-frequency loudspeaker away from the housing (132) so that the high-frequency loudspeaker (126) emits the sound (120) into the sound guide (128) in the housing (132) and the mid-frequency and/or low-frequency loudspeaker (124) emits sound away from the housing (132).

7. The flat loudspeaker according to one of claims 1 to 6, wherein the high-frequency loudspeaker is associated with a left stereo channel and the flat loudspeaker further comprises a further high-frequency loudspeaker associated with a right stereo channel and a further sound guide which is implemented to guide sound from the further high-frequency loudspeaker via a further acoustic aperture in the housing (132) laterally to the outside for a further non-directional emission, wherein the acoustic apertures are formed spatially separated on opposing peripheral sides of the housing (132).

8. The flat loudspeaker according to one of claims 1 to 7, wherein the mid-frequency loudspeaker and/or the low-frequency loudspeaker are arranged laterally in an area interior (132) of the back side (110) of the housing (132), wherein the high-frequency loudspeaker (126) is arranged along a lateral edge surrounding the area interior (132).

9. The flat loudspeaker according to one of claims 1 to 8, wherein the mid-frequency loudspeaker and/or the low-frequency loudspeaker (124) are formed from a two-dimensional distribution of electro-acoustic transducers (136).

10. The flat loudspeaker according to one of the preceding claims, wherein the flat loudspeaker comprises a display (102) on the front side of the housing (132).

11. The flat loudspeaker according to claim 10, wherein the display (102) has a lateral extent so that a projection of an image display portion of the display (102) overlaps the high-frequency loudspeaker (126) along a thickness direction of the housing.

12. The flat loudspeaker according to one of the preceding claims, further comprising a loudspeaker emitting towards the outside that is formed in the back side (110) of the housing adjacent to the acoustic aperture (130) and controlled by a first high-frequency signal which is phase-offset to a second high-frequency signal by which the high-frequency loudspeaker in the housing is controlled in order to cause a destructive overlaying with sound of the loudspeaker in the housing which leaves the acoustic aperture in a direction into which the back side (110) is directed.

13. The flat loudspeaker according to claim 12, wherein the loudspeaker that is formed in the backside (110) of the housing is a further mid-frequency or low-frequency loudspeaker which in addition to the first high-frequency signal is controlled by a mid-frequency or low-frequency signal.

14. The flat loudspeaker according to one of claims 1 to 11, wherein the sound generated by the high-frequency loudspeaker (126) and leaving the acoustic aperture in a direction into which the back side (110) is directed, could be canceled by a directed antiphase signal of a field of mid-frequency loudspeakers emitting towards the outside that is formed in the back side (110) of the housing adjacent to the acoustic aperture (130), if the same would be controlled by a first high-frequency signal which is phase-offset to a second high-frequency signal by which the high-frequency loudspeaker in the housing is controlled in order to cause a destructive overlaying with the sound of the loudspeaker in the housing which leaves the acoustic aperture in the direction into which the back side (110) is directed.

15. A TV or flatscreen comprising a flat loudspeaker according to one of the preceding claims.

## Revendications

1. Haut-parleur plat, avec
un boîtier (132) à forme de construction plane, avec une face avant et une face arrière (110);
un haut-parleur d'aigus (126) dans le boîtier (132);
un haut-parleur de fréquences moyennes et/ou un haut-parleur de graves (124) qui est/sont disposés de manière à rayonner de la face arrière (110) du boîtier (133) vers l'extérieur; et
un guide-son (128) qui est conçu pour guider le son (120) du haut-parleur (126) par l'intermédiaire d'une ouverture acoustique (130) dans le boîtier (132) vers l'extérieur, l'ouverture acoustique (130) étant réalisée sous forme d'une fente latéralement dans le boîtier (132) pour n'enlever de la surface utile ni du côté avant ni du côté arrière (110) du boîtier, de sorte que le son du haut-parleur d'aigus (126) soit rayonné pratiquement de forme cylindrique,
le haut-parleur d'aigus (126) étant réalisé de transducteurs électro-acoustiques disposés le long d'une ligne comme source acoustique linéaire avec un axe longitudinal le long de l'ouverture.

2. Haut-parleur plat selon la revendication 1, dans lequel la grandeur de l'ouverture acoustique (130) est inférieure à un diamètre de membrane du haut-parleur d'aigus (126).

3. Haut-parleur plat selon la revendication 1 ou 2, dans lequel une grandeur de l'ouverture acoustique (130) est inférieure à une longueur d'onde d'une fréquence la plus élevée du son (120) du haut-parleur d'aigus (126).

4. Haut-parleur plat selon l'une des revendications précédentes, dans lequel le haut-parleur d'aigus (126) et le haut-parleur de fréquences moyennes et/ou le haut-parleur de graves (124) sont disposés par leur normale de surface de membrane parallèles ou anti-parallèles entre eux.

5. Haut-parleur plat selon l'une des revendications précédentes, dans lequel la normale de membrane (127) du haut-parleur d'aigus est orientée vers le boîtier (132), de sorte que le haut-parleur d'aigus (126) rayonne le son (120) vers le guide-son (128) dans le boîtier (132).

6. Haut-parleur plat selon l'une des revendications 1 à 5, dans lequel une normale de membrane (125) du haut-parleur de fréquences moyennes et/ou du haut-parleur de graves (124) est orientée opposée à la normale de membrane (127) du haut-parleur d'aigus en s'éloignant du boîtier (132), de sorte que le haut-parleur d'aigus (126) rayonne le son (120) vers le guide-son (128) dans le boîtier (132) et le haut-parleur de fréquences moyennes et/ou le haut-parleur de graves (124) rayonne le son en s'éloignant du boîtier (132).

7. Haut-parleur plat selon l'une des revendications 1 à 6, dans lequel le haut-parleur d'aigus est associé à un canal stéréo gauche et le haut-parleur plat présente par ailleurs un autre haut-parleur d'aigus qui est associé à un canal stéréo droit et un autre guide-son qui est réalisé pour guider le son de l'autre haut-parleur d'aigus par l'intermédiaire d'une autre ouverture acoustique dans le boîtier (132) pour un autre rayonnement non directionnel latéralement vers l'extérieur, les ouvertures acoustiques étant formées séparées spatialement sur des côtés périphériques opposés du boîtier (132).

8. Haut-parleur plat selon l'une des revendications 1 à 7, dans lequel le haut-parleur de fréquences moyennes et/ou le haut-parleur de graves sont disposés latéralement à l'intérieur de la surface (132) du côté arrière (110) du boîtier (132), le haut-parleur d'aigus (126) étant disposé le long d'un bord latéral qui entoure l'intérieur de la surface (132).

9. Haut-parleur plat selon l'une des revendications 1 à 8, dans lequel le haut-parleur de fréquences moyennes et/ou le haut-parleur de graves (124) est formé à partir d'une distribution bidimensionnelle de transducteurs électro-acoustiques (136).

10. Haut-parleur plat selon l'une des revendications précédentes, dans lequel le haut-parleur plat présente un écran d'affichage (102) sur la face avant du boîtier (132).

11. Haut-parleur plat selon la revendication 10, dans lequel l'écran d'affichage (102) possède une étendue latérale, de sorte qu'une projection d'une zone d'affichage d'image de l'écran d'affichage (102) dans une direction de l'épaisseur du boîtier vienne en recouvrement avec le haut-parleur d'aigus (126).

12. Haut-parleur plat selon l'une des revendications précédentes, présentant par ailleurs un haut-parleur rayonnant vers l'extérieur qui est formé dans la face arrière (110) du boîtier, adjacent à l'ouverture acoustique (130) et est activé par un premier signal aigu qui est déphasé par rapport à un deuxième signal aigu par lequel est activé le haut-parleur d'aigus dans le boîtier, pour provoquer une superposition destructive avec le son du haut-parleur dans le boîtier qui sort de l'ouverture acoustique dans une direction vers laquelle est orientée la face arrière (110).

13. Haut-parleur plat selon la revendication 12, dans lequel le haut-parleur formé dans la face arrière (110) du boîtier est un autre haut-parleur de fréquences moyennes ou haut-parleur de graves qui est activé, outre par le premier signal aigu, par un signal de fréquences moyennes ou grave.

14. Haut-parleur plat selon l'une des revendications 1 à 11, dans lequel le son généré par le haut-parleur d'aigus (126) et sortant de l'ouverture acoustique dans une direction vers laquelle est orientée la face arrière (110) serait effaçable par un signal en opposition de phase dirigé d'un champs de haut-parleurs de fréquences moyennes rayonnant vers l'extérieur formés dans la face arrière (110) du boîtier adjacente à l'ouverture acoustique (130) s'il était activé par un premier signal aigu qui est déphasé par rapport à un deuxième signal aigu par lequel est activé le haut-parleur d'aigus dans le boîtier, pour provoquer une superposition destructive avec le son du haut-parleur dans le boîtier qui sort de l'ouverture acoustique dans la direction vers laquelle est orientée la face arrière (110).

15. Téléviseur ou écran plat avec un haut-parleur plat selon l'une des revendications précédentes.
